# EUROPÄISCHE PATENTSCHRIFT

(11) **EP 4 584 098 B1**
(45) Veröffentlichungstag und Bekanntmachung des Hinweises auf die Patenterteilung: **18.11.2026**
(21) Anmeldenummer: 23762156.0
(22) Anmeldetag: 18.08.2023
(51) Int. Cl.: B60C 11/13, B60C 11/03

(54) **FAHRZEUGREIFEN**
VEHICLE TIRE
PNEU DE VÉHICULE

(30) Priorität: 06.09.2022 DE 102022209271
(43) Veröffentlichungstag der Anmeldung: 16.07.2025
(73) Patentinhaber: Continental Reifen Deutschland GmbH, 30175 Hannover (DE)
(72) Erfinder: WOIDTKE, Oliver, 30175 Hannover (DE); HEINHAUPT, Torsten, 30175 Hannover (DE); WIESE, Klaus, 30175 Hannover (DE); VENNEBÖRGER, Martin, 30175 Hannover (DE); TOMFORDE, Willem, 30175 Hannover (DE)
(74) Vertreter: Continental Corporation
(86) Internationale Anmeldenummer: PCT/DE2023/200171
(87) Internationale Veröffentlichungsnummer: WO 2024/051901

(56) Entgegenhaltungen:
- WO-A1-2020/003485
- DE-A1- 102015 223 535
- DE-A1- 102017 221 582
- DE-T2- 60 106 927
- DE-T5- 112014 002 102
- JP-A- 2010 120 534
- JP-A- 2014 159 178
- JP-A- H09 142 106
- JP-A- H11 198 607

## Beschreibung

Die Erfindung betrifft einen Fahrzeugreifen mit einem Laustreifen, wobei der Laufstreifen wenigstens zwei Profilblöcke umfasst, wobei zwischen den zwei Profilblöcken eine Rille angeordnet ist, wobei auf der Oberfläche der Rille eine eindimensionale Rillenkontur verläuft. Eine Profilblockkontur wenigstens eines der Profilblöcke umfasst eine Kontaktseitenkontur, eine Kantenbereichskontur, eine Fasenkontur und eine Flankenkontur, wobei die Kontaktseitenkontur an die Kantenbereichskontur grenzt, wobei die Kantenbereichskontur an die Fasenkontur grenzt und wobei die Fasenkontur an die Flankenkontur grenzt, wobei die Rillenkontur an die Flankenkontur angrenzt. Die Kontaktseitenkontur verläuft im Wesentlichen in einer Basisfläche des Laufstreifens, wobei wenigstens ein Punkt auf der Kantenbereichskontur um eine Kantenbereichshöhe oberhalb der Basisfläche liegt.

Profilblöcke auf den Laufstreifen von Fahrzeugreifen weisen spezifische Konturen auf, die Einfluss auf verschiedene Eigenschaften der Fahrzeugreifen haben können. Zum einen werden beispielsweise Fasen an den Blockkanten von Profilblöcken vorgesehen, um eine Traktion auf Schnee zu erhöhen. Fasen können darüber hinaus auch die Haftungseigenschaften auf nassen sowie trockenen Fahrbahnen unter Bremsbedingungen verbessern. Alternativ werden radial vorstehende Kantenbereiche an den Profilblöcken vorgesehen, die als Schneekanten einen Milling-Effekt erzielen und die Traktion auf Schnee verbessern können. Radial vorstehende Kantenbereiche bzw. Rippen können darüber hinaus zur Reduktion eines Vorbeifahrgeräusches beitragen.

DE 10 2015 223 535 A1 beschreibt Fahrzeugluftreifen mit Profilblöcken, wobei an jeden Profilblock in Umfangsrichtung jeweils eine Rille angrenzt und wobei auf den Profilblöcken Rippen ausgebildet sind, welche sich an einen Rillenabschnitt angrenzend erstrecken sowie gegenüber einer jeweiligen Profilblockoberfläche in radialer Richtung jeweils eine Höhe von 0,2 mm bis 0,5 mm und an ihrer Basis jeweils eine Breite von 0,7 mm bis 1,9 mm aufweisen. Ein weiterer Fahrzeugreifen, bei dem eine an eine Rille angrenzende Blockkante einen sich radial nach außen erstreckenden Vorsprung aufweist, ist in WO2020/003485 A1 offenbart. DE 11 2014 002 102 T5 beschreibt einen Luftreifen, aufweisend ein zweites Profil, wobei ein Schulterstegabschnitt eine Bodenkontaktflächenform aufweist, die in einer Reifenradialrichtung zu einer in Reifenbreitenrichtung äußeren Seite allmählich ansteigt.

Manche Kontureigenschaften von Profilblöcken können sich auch negativ auf die Eigenschaften von Fahrzeugreifen auswirken bzw. negative Nebeneffekte hervorrufen. Fasen können sich beispielsweise negativ auf das Vorbeifahrgeräusch auswirken. Schneekanten können sich negativ auf die Trockenbremseigenschaften auswirken. Bisher waren somit oft die durch eine spezifische Kontureigenschaft zu erzielenden Verbesserungen in einem Bereich gegen die damit einhergehenden Verschlechterungen in einem anderen Bereich abzuwägen.

Der Erfindung liegt die Aufgabe zugrunde, die Schneetraktionseigenschaften eines Fahrzeugreifens zu optimieren, ohne dabei eine Verschlechterung der Bremseigenschaften auf nasser und trockener Straße in Kauf zu nehmen und ohne dabei das Vorbeifahrgeräusch negativ zu beeinflussen.

Die gestellte Aufgabe wird erfindungsgemäß dadurch gelöst, dass die Profilblockkontur zwischen einem ersten Punkt auf der Flankenkontur und einem unterhalb der Basisfläche gelegenen zweiten Punkt auf der Fasenkontur einen konvexen Verlauf annimmt.

Die Erfindung basiert zunächst auf dem Gedanken, dass durch eine Kombination der erfindungsgemäßen Fasenkontur mit der erfindungsgemäßen Kantenbereichskontur die positiven Schneetraktionseigenschaften einer Fase und einer Schneekante kombiniert werden können. Darüber hinaus erkennt die Erfindung, dass die unerwünschten Nebeneffekte einer jeweils für sich genommenen Fase bzw. Schneekante durch die positiven Effekte der jeweils anderen Kontureigenschaft abgemildert, aufgehoben oder sogar überkompensiert werden können. Insbesondere kann den mit der erfindungsgemäßen Kantenbereichskontur und insbesondere mit einer Schneekante verbundenen nachteiligen Trockenbremseigenschaften durch die vorteilhaften, mit der erfindungsgemäßen Fasenkontur verbundenen Bremseigenschaften entgegengewirkt werden. Auf der anderen Seite kann den mit der erfindungsgemäßen Fasenkontur verbundenen nachteiligen Auswirkungen auf das Vorbeifahrgeräusch durch vorteilhafte, mit der erfindungsgemäßen Kantenbereichskontur verbundene Auswirkungen auf das Vorbeifahrgeräusch entgegengewirkt werden.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. **In** Radialrichtung nach innen bezieht sich auf die Orientierung, die in Radialrichtung der Rotationsachse zugewandt ist. **In** Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorialebene bzw. einer Reifenäquatorlinie axial zugewandt ist. Die Reifenäquatorialebene ist eine zur Rotationsachse des Fahrzeugreifens senkrechte Ebene, die durch die Mitte der axialen Breite des Fahrzeugreifens verläuft, wobei die Reifenäquatoriallinie in der Reifenäquatorialebene und auf der Oberfläche des Fahrzeugreifens verläuft.

Die Basisfläche des Laufstreifens fällt zusammen mit jener makroskopisch glatten Oberfläche, welche der Laufstreifen aufweisen würde, wenn keinerlei negative und keinerlei positive Profilelemente, wie etwa Rillen oder Vorsprünge, auf dem Laufstreifen vorgesehen wären. Die Basisfläche bleibt konkret überall dort im Laufstreifen physisch erhalten, wo keine solchen Profilelemente vorgesehen sind.

Die erhaltenen Abschnitte der Basisfläche können wenigstens teilweise für einen Kontakt mit einem Fahrbahnuntergrund bestimmt sein. Dort, wo beispielweise eine Rille durch den Laufstreifen verläuft, verläuft die Basisfläche als imaginäre Fläche oberhalb der Rille weiter; dort wo beispielsweise ein Vorsprung auf dem Laufstreifen angeordnet ist, verläuft die Basisfläche als imaginäre Fläche unter dem Vorsprung weiter.

Die Kontaktseitenkontur kann dann als im Wesentlichen in der Basisfläche verlaufend bezeichnet werden, wenn sie zu mehr als 50% ihrer Länge in der Basisfläche verläuft. Die Kontaktseitenkontur kann beispielsweise von Einschnitten und/oder Vorsprüngen an dem Laufstreifen durchbrochen sein, bzw. lokal durch die Einschnitte hindurch und/oder über die Vorsprünge hinweg verlaufen.

Es können mikroskopische Rauigkeiten auf der Basisfläche oder auf Flächen des Profilblocks, wie beispielsweise einer Kontaktseite, einem Kantenbereich, einer Flanke oder einer Fase auftreten, die im Rahmen eines Herstellprozesses durch eine Form dem Reifen aufgeprägt und/oder durch eine Nachbehandlung eines geheizten Reifens erzeugt werden können. Solche Rauigkeiten sind durch eine Amplitude von weniger als 50 µm gekennzeichnet und können die Reibeigenschaften der rauen Fläche auf verschiedenen Oberflächen oder mit verschiedenen Kontaktpartnern beeinflussen. Die Rauigkeiten werden für die vorliegende Beschreibung einer Erfindung vernachlässigt, können aber mit der erfindungsgemäßen Lehre kombiniert werden.

Ein Punkt auf der Kantenbereichskontur liegt dann um eine Kantenbereichshöhe oberhalb der Basisfläche, wenn der Punkt, senkrecht zu der imaginär unter dem Punkt verlaufenden Basisfläche gemessen, eine Kantenbereichshöhe von der Basisfläche beabstandet ist. Ein Punkt liegt unterhalb der Basisfläche, wenn der Punkt, senkrecht zu der imaginär über dem Punkt verlaufenden Basisfläche gemessen, von der Basisfläche beabstandet ist. Wenn die Basisfläche gekrümmt ist, wird der Abstand entlang eines Normalenvektors auf der Basisfläche gemessen.

Alternativ kann der Laufstreifen in einem abgewickelten Zustand betrachtet werden und so als Grundlage für Abstandmessungen und beispielsweise für Richtungsmessungen herangezogen werden. In dem abgewickelten Zustand ist der Laufstreifen in Umfangsrichtung und in axialer bzw. radialer Richtung so von dem Fahrzeugreifen abgewickelt bzw. so aufgeklappt, dass die Basisfläche in einer flachen Ebene liegt.

Die Profilblockkontur nimmt dann zwischen einem ersten Punkt auf der Flankenkontur und einem unterhalb der Basisfläche gelegenen zweiten Punkt auf der Fasenkontur einen konvexen Verlauf an, wenn die Profilblockkontur zwischen den beiden Punkten ausschließlich zu einer äußeren Seite einer zwischen den beiden Punkten verlaufenden geraden Verbindungsstrecke liegt, wobei die äußere Seite in Richtung der Oberfläche des Profilblocks gelegen ist. Die Verbindungslinie kann einen kurvigen Verlauf aufweisen und/oder eine oder mehrere Kanten umfassen. Vorzugsweise ist der konvexe Verlauf, senkrecht zu der geraden Verbindungsstrecke zwischen dem ersten Punkt und dem zweiten Punkt gemessen, wenigstens bis zu 0,3 mm, vorzugsweise zwischen 0,5 mm und 1 mm von der geraden Verbindungsstrecke beabstandet.

Die Kontaktseitenkontur, die Kantenbereichskontur, die Fasenkontur und die Flankenkontur können paarweise stetig ineinander übergehen und können auch in erster Ableitung und höheren Ableitungen paarweise stetig ineinander übergehen. Alternativ können die Kontaktseitenkontur, die Kantenbereichskontur, die Fasenkontur und die Flankenkontur paarweise unter definierten Winkeln ineinander übergehen. Hierbei ist zu beachten, dass Winkel in einem Profil eines Fahrzeugreifens üblicherweise im Rahmen von Fertigungstoleranzen mit einem gewissen Übergangsradius abgerundet sind.

Besonders bevorzugt ist eine Ausführung, wobei die Kontaktseitenkontur im abgewickelten Zustand des Laufstreifens im Wesentlichen entlang einer ersten Geraden verläuft, wobei die Fasenkontur im Wesentlichen entlang einer zweiten Geraden verläuft und wobei die zweite Gerade gegenüber der ersten Geraden um einen Fasenwinkel verdreht ist. Weiterhin kann die Flankenkontur im abgewickelten Zustand des Laufstreifens im Wesentlichen entlang einer dritten Geraden verlaufen, wobei die dritte Gerade gegenüber der ersten Geraden um einen Flankenwinkel verdreht sein kann. Insbesondere ist der Fasenwinkel vorzugsweise kleiner als der Flankenwinkel. Ein an die Fasenkontur angrenzender erster Abschnitt der Kantenbereichskontur kann im abgewickelten Zustand des Laufstreifens zudem im Wesentlichen entlang einer zusätzlichen Geraden verlaufen, wobei die zusätzliche Gerade gegenüber der ersten Geraden um einen Kantenbereichswinkel verdreht sein kann.

Die Verdrehung der zweiten Geraden gegenüber der ersten Geraden um den Fasenwinkel kann in einem ersten Drehsinn erfolgen. Die Verdrehung der dritten Geraden gegenüber der ersten Geraden um den Flankenwinkel kann ebenfalls in dem ersten Drehsinn erfolgen. Die Verdrehung der zusätzlichen Geraden gegenüber der ersten Geraden um den Kantenbereichswinkel kann ebenfalls in dem ersten Drehsinn erfolgen. Die Bezeichnungen "erste", "zweite", "dritte" und "zusätzliche" dienen ausschließlich der Identifikation der verschiedenen Geraden und beschreiben keine besonderen Orientierungen, Anordnungen und/oder Eigenschaften der Geraden, die über die ausdrücklich beschriebenen Orientierungen, Anordnungen und/oder Eigenschaften der Geraden hinausgehen oder davon abweichen.

Eine Kontur, die im Wesentlichen entlang einer bestimmten Geraden verläuft, kann eine Gerade sein, die nur um einen kleinen Winkel, beispielsweise um weniger als 2° gegenüber der bestimmten Geraden verdreht ist. Eine Kontur, die im Wesentlichen entlang einer bestimmten Geraden verläuft, kann abweichend verlaufende Abschnitte haben aber zu einem großen Anteil, beispielsweise zu mehr als 50% ihrer Gesamtlänge mit einer Abweichung von weniger als 2° entlang der bestimmten Geraden verlaufen. Die Kontaktseitenkontur verläuft vorzugsweise zu mehr als 50% ihrer Länge entlang der ersten Geraden. Die Fasenkontur verläuft vorzugsweis zu mehr als 50% ihrer Länge entlang der zweiten Geraden. Die Flankenkontur verläuft vorzugsweise zu mehr als 50% ihrer Länge entlang der dritten Geraden. Der erste Abschnitt der Kantenbereichskontur verläuft vorzugsweis zu mehr als 50% seiner Länge entlang der zusätzlichen Geraden.

Der Profilblock umfasst eine Profilblockoberfläche. Die Profilblockkontur ist eindimensional und verläuft auf der Profilblockoberfläche. Weiterhin verläuft die Profilblockkontur senkrecht zu einem Profilblockkonturvektor und in einer imaginären Profilblockkonturebene, wobei der Profilblockkonturvektor ein Normalenvektor auf der Profilblockkonturebene ist. Der Profilblockkonturvektor hat vorzugsweise keine Komponente in Radialrichtung. Mit anderen Worten schließt die Profilblockkonturebene vorzugsweise die Radialrichtung ein. Der Profilblockkonturvektor kann beispielsweise vornehmlich in Axialrichtung oder vornehmlich in Umfangsrichtung zeigen. Ein vornehmlich in eine bestimmte Richtung zeigender Vektor schließt einen Winkel von weniger als 45° mit der bestimmten Richtung ein. Eine vornehmlich in eine bestimmte Richtung weisende Ebene hat den vornehmlich in die bestimmte Richtung zeigenden Vektor als Normalenvektor.

Die Profilblockoberfläche kann eine Kontaktseite, einen Kantenbereich, eine Fase und eine Flanke umfassen, wobei die Kontaktseitenkontur auf der Kontaktseite, die Kantenbereichskontur auf dem Kantenbereich, die Fasenkontur auf der Fase und die Flankenkontur auf der Flanke verlaufen.

Insbesondere kann ein Normalenvektor auf der Kontaktseite im Wesentlichen in Radialrichtung nach außen weisen; im abgewickelten Zustand des Laufstreifens liegt die Kontaktseite im Wesentlichen auf der Basisfläche. Die Kontaktseite kann dazu ausgelegt sein, im Betrieb des Fahrzeugreifens in direkten Kontakt mit einem Fahrbahnuntergrund zu treten.

Der Profilblock hat eine Breitenerstreckung. Die Breitenerstreckung ist eindimensional und verläuft auf der Profilblockoberfläche. Die Breitenerstreckung kann entlang einer oder mehrerer Geraden verlaufen und/oder gekrümmt sein. Die Breitenerstreckung schneidet die Profilblockkontur an einem Schnittpunkt. An dem Schnittpunkt verläuft die Breitenerstreckung wenigstens teilweise senkrecht, vorzugsweise vornehmlich senkrecht und weiter vorzugsweise genau senkrecht zu der Profilblockkontur. Beispielsweise kann, wenn die Breitenerstreckung des Profilblocks an dem Schnittpunkt vornehmlich in Axialrichtung verläuft, die Profilblockkontur senkrecht zur Axialrichtung verlaufen oder die Profilblockkontur senkrecht zur Breitenerstreckung verlaufen.

Ein Profilblock kann mehrere Profilblockkonturen umfassen. Eine Breitenerstreckung eines Profilblocks kann an mehreren verschiedenen Schnittpunkten von erfindungsgemäßen Profilblockkonturen geschnitten werden. Ein Abschnitt einer Breitenerstreckung, der aus Schnittpunkten besteht, kann mit einer Schar von Profilblockkonturen einen Abschnitt einer Profilblockoberfläche aufspannen. Eine Kontaktseite, ein Kantenbereich, eine Fase und eine Flanke können über die gesamte Breitenerstreckung eines Profilblocks vorgesehen sein oder nur entlang eines Teils der Breitenerstreckung. In einer Ausführungsform der Erfindung sind Kontaktseite, Kantenbereich, Fase und Flanke überall dort vorgesehen, wo die Breitenerstreckung eines Profilblocks vornehmlich in Axialrichtung verläuft. Die Profilblockkonturen können an unterschiedlichen Schnittpunkten entlang der Breitenerstreckung unterschiedliche oder identische Formen annehmen.

Der Flankenwinkel ist vorzugsweise nicht wesentlich größer als 90°, insbesondere kleiner als 95°; der Flankenwinkel kann zwischen 60° und 90°, vorzugsweise zwischen 77° und 90° liegen. Der Fasenwinkel kann zwischen 20° und 70°, vorzugsweise zwischen 35° und 55° liegen. Der Kantenbereichswinkel ist vorzugsweise nicht größer als 90°; insbesondere kann der Kantenbereichswinkel zwischen 20° und 90°, vorzugsweise zwischen 45° und 90° liegen. Der Fasenwinkel kann zwischen 10° und 80°, vorzugsweise zwischen 25° und 55° kleiner sein als der Flankenwinkel. Der Kantenbereichswinkel kann sich von dem Fasenwinkel unterscheiden; insbesondere kann der Kantenbereichswinkel zwischen 10° und 80°, vorzugsweise zwischen 25° und 55° größer sein als der Fasenwinkel. Die Winkelangaben gelten vorzugsweise für Profilblockkonturen, die an dem Schnittpunkt senkrecht zu der Breitenerstreckung des Profilblocks verlaufen.

Der Profilblock kann eine Schneekante umfassen, wobei sich der Kantenbereich der Profilblockoberfläche und die Oberfläche der Schneekante überschneiden können. Insbesondere können der Kantenbereich der Profilblockoberfläche und die Oberfläche der Schneekante identisch sein, sodass die Kantenbereichskontur eine Kontur der Schneekante definiert.

Die Kantenbereichshöhe zwischen dem wenigstens einen Punkt auf der Kantenbereichskontur und der Basisfläche kann zwischen 0,1 mm und 1 mm, vorzugsweise zwischen 0,2 mm und 0,5 mm betragen. Die Kantenbereichshöhe kann einem Vorstehen der Schneekante über der Kontaktseite bzw. über der Basisfläche entsprechen.

Insbesondere kann der erste Abschnitt der Kantenbereichskontur wenigstens teilweise oberhalb der Basisfläche verlaufen. Vorzugsweise verläuft der erste Abschnitt der Kantenbereichskontur überwiegend oberhalb der Basisfläche. Insbesondere kann die Kontaktseitenkontur an dem einen Ende der Kantenbereichskontur auf der gleichen Höhe angrenzen, wie die Fasenkontur an dem anderen Ende der Kantenbereichskontur, sodass der erste Abschnitt der Kantenbereichskontur vollständig oberhalb der Basisfläche liegt.

Die Kantenbereichskontur kann einen zweiten Abschnitt umfassen, wobei der zweite Abschnitt im abgewickelten Zustand des Laufstreifens im Wesentlichen parallel zu der Basisfläche des Laufstreifens verlaufen kann. Der zweite Abschnitt kann zwischen 0,2 mm und 2 mm, vorzugsweise zwischen 0,3 mm und 1 mm lang sein. Die Längenangaben gelten vorzugsweise für Profilblockkonturen, die am Schnittpunkt senkrecht zu der Breitenerstreckung des Profilblocks verlaufen.

Die Kantenbereichskontur kann einen dritten Abschnitt umfassen, wobei der dritte Abschnitt einen Winkel mit einer Senkrechten auf der Basisfläche einschließen kann. Alternativ kann der dritte Abschnitt im Wesentlichen parallel zu der Senkrechten auf der Basisfläche verlaufen. Der zweite Abschnitt kann an den ersten Abschnitt angrenzen, wobei der dritte Abschnitt mit einem ersten Ende an den zweiten Abschnitt und mit einem zweiten Ende an die Kontaktseitenkontur angrenzen kann.

Durch die Vielzahl an Ecken und Winkel in der Kantenbereichskontur können die Schneetraktionseigenschaften des Fahrzeugreifens weiter verbessert werden. Insbesondere kann sich im Bereich der Ecken und Winkel Schnee im Reifenprofil festsetzen, wodurch sich ein Schnee-Schnee-Griff zwischen dem Fahrzeugreifen und einem schneebedeckten Fahrbahnuntergrund ausbilden kann.

Eine Verbindungsgerade durch den ersten Punkt auf der Flankenkontur und einen dritten Punkt auf der Fasenkontur kann die Kantenbereichskontur in einem vierten Punkt schneiden. Dies kann beispielsweise der Fall sein, wenn sich die konvexe Wölbung der Profilblockkontur in einem Abschnitt zwischen der Fasenkontur und der Kantenbereichskontur umkehrt, sodass eine Verbindungslinie zwischen dem dritten Punkt und dem vierten Punkt konkav ist. Die Fasenkontur kann vollständig unterhalb der Basisfläche verlaufen, also gänzlich in einem Negativabschnitt des Profils des Fahrzeugreifens angeordnet sein. Der dritte Punkt auf der Fasenkontur kann gleich dem zweiten Punkt auf der Fasenkontur sein. Dies ist insbesondere dann möglich, wenn die Fasenkontur vollständig unterhalb der Basisfläche verläuft.

Die Fasenkontur kann sich im abgewickelten Zustand des Laufstreifens parallel zur Basisfläche zwischen 0,5 mm und 3 mm und senkrecht zur Basisfläche zwischen 0,5 mm und 4 mm erstrecken. Vorzugsweise erstreckt sich die Fasenkontur parallel zur Basisfläche zwischen 0,8 mm und 2 mm und senkrecht zur Basisfläche zwischen 0,8 mm und 3 mm. Die Längenangaben gelten vorzugsweise für Profilblockkonturen, die an dem Schnittpunkt senkrecht zu der Breitenerstreckung des Profilblocks verlaufen.

Der Laufstreifen umfasst zwei Profilblöcke, wobei zwischen den zwei Profilblöcken eine Rille angeordnet ist. Auf einer Oberfläche der Rille verläuft eine eindimensionale Rillenkontur, wobei die Rillenkontur in der gleichen imaginären Ebene wie die Profilblockkontur liegen kann und wobei die Rillenkontur an die Flankenkontur angrenzt.

Insbesondere kann der Laufstreifen mehrere Profilblöcke umfassen, wobei zwischen den Profilblöcken mehrere Rillen verlaufen können und wobei die Rillen beispielsweise vornehmlich in Umfangsrichtung verlaufende Rillen und/oder vornehmlich in Axialrichtung verlaufende Rillen umfassen können. In einer Ausführungsform der Erfindung kann an jede Rille eine Profilblockoberfläche mit erfindungsgemäßer Profilblockkontur grenzen.

Die Profilblockoberfläche kann zwei Flanken, zwei Fasen und zwei Kantenbereiche umfassen, wobei die Kantenbereichskontur eines ersten Kantenbereichs und die Kantenbereichskontur eines zweiten Kantenbereichs einander gegenüberliegend an die Kontaktseitenkontur angrenzen können. Eine solche Ausführungsform kann insbesondere bei nicht laufrichtungsgebunden Fahrzeugreifen besonders vorteilhaft sein, und zwar insbesondere dann, wenn die Profilblockkonturebene vornehmlich in Axialrichtung weist und die Flanken, Fasen und Kantenbereiche zu gegenüberliegenden Seiten des Profilblocks beim Bremsen und Beschleunigen wenigstens teilweise in Umfangsrichtung beansprucht werden. Alternativ kann die Profilblockoberfläche eines Profilblocks lediglich je eine Flanke, eine Fase und einen Kantenbereich mit darauf verlaufender erfindungsgemäßer Profilblockkontur umfassen. In diesem Fall sind die Flanke, die Fase und der Kantenbereich vorzugsweise an einer Bremskante des Fahrzeugreifens angeordnet.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine perspektivische Ansicht eines Fahrzeugreifens mit einem Laufstreifen und Profilblöcken,
Figur 2 schematisch den Laufstreifen des Fahrzeugreifes aus Figur 1 in einem abgewickelten Zustand,
Figur 3 schematisch eine perspektivische Ansicht einer Ausführungsform einer erfindungsgemäßen Profilblockoberfläche,
Figur 4a eine zu einer Profilblockoberfläche gemäß Figur 3 korrespondierende Profilblockkontur,
Figur 4b die in Figur 4a gezeigt Profilblockkontur mit alternativen Erläuterungszeichen,
Figur 5 eine Profilbockkontur im Übergang zu einer Rinnenkontur gemäß einer alternativen Ausführungsform der Erfindung,
Figur 6 eine Profilblockkontur mit je zwei Flankenkonturen, Fasenkonturen und Kantenbereichskonturen gemäß einer weiteren alternativen Ausführungsform der Erfindung,
Figur 7 eine perspektivische Ansicht eines Laufstreifens mit mehreren Profilblöcken gemäß einer Ausführungsform der Erfindung.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

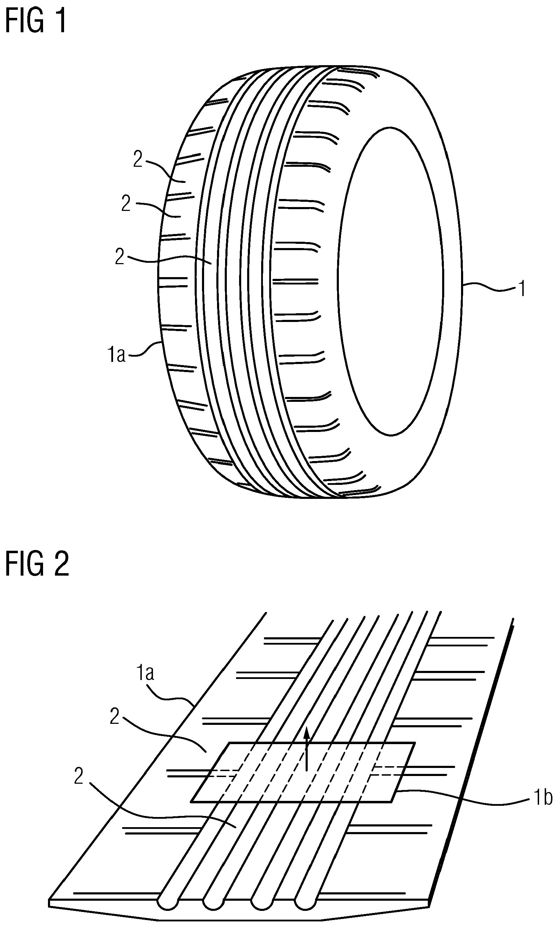

Figur 1 zeigt schematisch einen Fahrzeugreifen 1 mit einem Laufstreifen 1a und Profilblöcken 2. Das Muster des gezeigten Profils ist als generisches Beispiel eines Profilmusters zu verstehen und muss nicht zwingend eine besondere Eignung zu einer Kombination mit der erfindungsgemäßen Lehre aufweisen. Soll die Erfindung an dem gezeigten Profil zum Einsatz kommen, so können sowohl die durch Querrillen in den Reifenschultern untereinander abgegrenzten Profilblöcke 2 als auch die durch Umfangsrillen untereinander abgegrenzten umlaufenden Rippen 2 im mittleren Bereich des Laufstreifens 1a als erfindungsgemäße Profilblöcke 2 ausgestaltet werden. Alternativ kann die erfindungsgemäße Lehre auch auf beliebige andere Profilgeometrien mit entsprechend alternativ angeordneten Profilblöcken 2 angewendet werden.

Figur 2 zeigt den Laufstreifen 1a des Fahrzeugreifens 1 aus Figur 1 in einem abgewickelten Zustand. In dem abgewickelten Zustand ist der Laufstreifen 1a in Umfangsrichtung und in axialer bzw. radialer Richtung so von dem Fahrzeugreifen abgewickelt bzw. so aufgeklappt, dass eine Oberfläche des Laufstreifens 1a im Wesentlichen mit einer flachen Ebene zusammenfällt. Wären in dem gezeigten Beispiel keine Rillen in dem Laufstreifen 1a vorgesehen, bzw. würden die Rillen vollständig mit Material aufgefüllt und würde die Oberfläche des Laufstreifens 1a auf diese Weise nivelliert, so würde die Oberfläche des Laufstreifens 1a in dem abgewickelten Zustand vollständig in einer flachen Ebene liegen. Eine imaginäre Oberfläche eines Laufstreifens 1a, die sich unter Wegdenken jeglicher Profilelemente wie Rillen oder Vorsprünge ergeben würde, wird als Basisfläche 1b bezeichnet und liegt im abgewickelten Zustand des Laufstreifens 1a ebenfalls in einer flachen Ebene, wie in Figur 2 gezeigt.

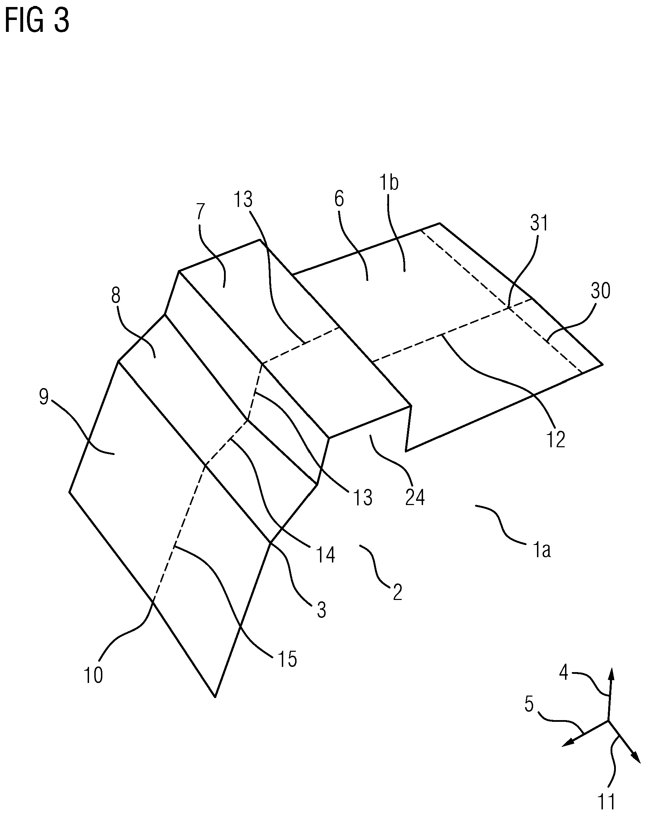

Figur 3 zeigt eine Profilblockoberfläche 3 auf einer Ausführungsform eines erfindungsgemäßen Profilblocks 2 mit einer Flanke 9, einer Fase 8, einem Kantenbereich 7 und einer Kontaktseite 6. Die Kontaktseite 6 weist in Radialrichtung 4 nach außen und liegt in der Basisfläche 1b des Laufstreifens 1a. Die Flanke 9, die Fase 8 und der Kantenbereich 7 weisen in Radialrichtung 4 nach außen und/oder in Umfangsrichtung 5. Der Kantenbereich 7 fällt mit der Oberfläche einer Schneekante 24 des Profilblocks 2 zusammen. Mit anderen Worten ist der Kantenbereich 7 gemäß der dargestellten Ausführungsform mit der Oberfläche der Schneekante 24 identisch. Senkrecht zur Axialrichtung 11 verläuft eine Profilblockkontur 10. Die Profilblockkontur 10 umfasst eine Kontaktseitenkontur 12, eine Kantenbereichskontur 13, eine Fasenkontur 14 und eine Flankenkontur 15. Die Profilblockoberfläche 3 hat eine Breitenerstreckung 30, die parallel zur Axialrichtung 11 verläuft. Die Breitenerstreckung 30 schneidet die Profilblockkontur 10 an einem Schnittpunkt 31 in einem rechten Winkel.

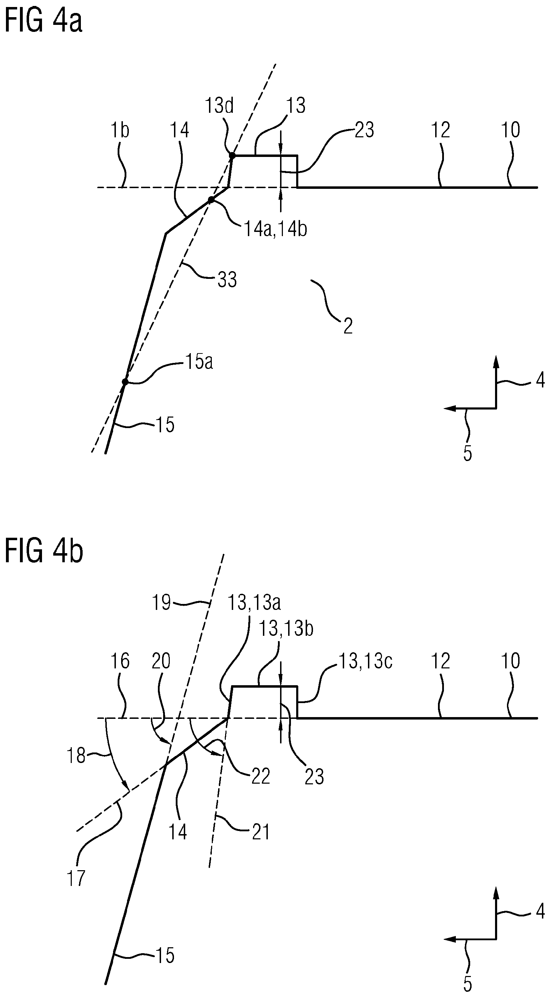

Figur 4a zeigt die Profilblockkontur 10 aus Figur 3, wobei die Zeichnungsebene der Profilblockkonturebene entspricht. Die Kontaktseitenkontur 12 grenzt an die Kantenbereichskontur 13, wobei die Kantenbereichskontur 13 an die Fasenkontur 14 grenzt und wobei die Fasenkontur 14 an die Flankenkontur 15 grenzt. Die Kontaktseitenkontur 12 verläuft in der Basisfläche 1b, deren Schnitt mit der Zeichnungsebene in Figur 4a als gestrichelte Linie dargestellt ist. Die Kantenbereichskontur 13 verläuft in ihrem maximalen Abstand von der Basisfläche 1b in einer Kantenbereichshöhe 23 oberhalb der Basisfläche 1b. Die Profilblockkontur 10 nimmt zwischen einem ersten Punkt 15a auf der Flankenkontur 15 und einem unterhalb der Basisfläche 1b gelegenen zweiten Punkt 14a auf der Fasenkontur 14 einen konvexen Verlauf an. Mit anderen Worten sind die Flankenkontur 15 und die Fasenkontur zwischen dem ersten Punkt 15a und dem zweiten Punkt 14a in Umfangsrichtung 5 und Radialrichtung 4 gegenüber einer geraden Verbindungsstrecke zwischen den beiden Punkten 14a, 15a aus dem Profilblock 2 herausgewölbt.

In dem gezeigten Ausführungsbeispiel schneidet eine Verbindungsgerade 33 durch den ersten Punkt 15a und einen dritten Punkt 14b die Kantenbereichskontur 13 in einem vierten Punkt 13d. Zwischen dem dritten Punkt 14a auf der Fasenkontur 14 und dem vierten Punkt 13d auf der Kantenbereichskontur 13 ergibt sich hierbei ein konkaver Abschnitt der Profilblockkontur 10. In dem gezeigten Ausführungsbeispiel verläuft die Fasenkontur 14 zudem vollständig unterhalb der Basisfläche 1b und der unterhalb der Basisfläche 1b angeordnete zweite Punkt 14a fällt mit dem dritten Punkt 14b zusammen. Somit liegt die gerade Verbindungsstrecke zwischen dem ersten Punkt 15a und dem zweiten Punkt 14a in dem gezeigten Ausführungsbeispiel auf der Verbindungsgeraden 33 zwischen dem ersten Punkt 15a und dem dritten Punkt 14b. Der konvexe Verlauf kann senkrecht zu der geraden Verbindungsstrecke - und in dem gezeigten Ausführungsbeispiel auch senkrecht zu der Verbindungsgeraden 33 - wenigstens bis zu 0,3 mm, vorzugsweise zwischen 0,5 mm und 1 mm beabstandet sein.

Die konvexen und/oder konkaven Verläufe der Profilblockkontur können anstelle der in Figur 4a gezeigten gewinkelten Ausformung auch gerundet sein. In einer bevorzugten Ausführungsform verlaufen die einzelnen Konturbereiche jedoch wenigstens teilweise entlang von Geraden, wie nachfolgend anhand von Figur 4b noch deutlicher beschrieben wird.

Figur 4b zeigt die Profilblockkontur 10 aus Figur 4a, jedoch mit abweichenden Hilfslinien und Bezugszeichen. Demgemäß verläuft die Kontaktseitenkontur 12 entlang einer ersten Geraden 16, wobei die erste Gerade 16 parallel zur Umfangsrichtung 5 verläuft. Die Fasenkontur 14 verläuft entlang einer zweiten Geraden 17, wobei die zweite Gerade 17 gegenüber der ersten Geraden 16 um einen Fasenwinkel 18 verdreht ist. Die Flankenkontur 15 verläuft entlang einer dritten Geraden 19, wobei die dritte Gerade 19 gegenüber der ersten Geraden 16 um einen Flankenwinkel 20 verdreht ist. In der dargestellten Ausführungsform ist der Fasenwinkel 18 kleiner als der Flankenwinkel 20. Ein an die Fasenkontur 14 angrenzender erster Abschnitt 13a der Kantenbereichskontur 13 verläuft entlang einer zusätzlichen Geraden 21, wobei die zusätzliche Gerade 21 gegenüber der ersten Geraden 16 um einen Kantenbereichswinkel 22 verdreht ist. Der Kantenbereichswinkel 22 unterscheidet sich von dem Fasenwinkel 18, sodass ein zusätzlicher Winkel zwischen dem ersten Abschnitt 13a und der Fasenkontur 14 entsteht.

Die Kantenbereichskontur 13 umfasst einen zweiten Abschnitt 13b, wobei der zweite Abschnitt 13b parallel zur Umfangsrichtung 5 verläuft. Weiterhin umfasst die Kantenbereichskontur 13 einen dritten Abschnitt 13c, wobei der dritte Abschnitt 13c parallel zur Radialrichtung 4 verläuft. Gemäß dem in Figur 3 dargestellten Ausführungsbeispiel grenzt der zweite Abschnitt 13b an den ersten Abschnitt 13a, wobei der dritte Abschnitt 13c an den zweiten Abschnitt 13b sowie an die Kontaktseitenkontur 12 grenzt. Die Kontaktseitenkontur 12 grenzt in Radialrichtung 4 auf der gleichen Höhe an die Kantenbereichskontur 13, wie die Kantenbereichskontur 13 an die Fasenkontur 14. Der Übergang zwischen der Kontaktseitenkontur 12 und dem dritten Abschnitt 13c auf der einen Seite und der Übergang zwischen der Fasenkontur 14 und dem ersten Abschnitt 13a auf der anderen Seite sind somit gemäß der dargestellten Ausführungsform radial auf der gleichen Höhe wie die Kontaktseitenkontur 12 angeordnet. Weiterhin verläuft der erste Abschnitt 13a der Kantenbereichskontur 13 gemäß der dargestellten Ausführungsform in Radialrichtung 4 vollständig oberhalb der Kontaktseitenkontur 12 und der zweite Abschnitt 13b liegt radial um eine Kantenbereichshöhe 23 oberhalb der Kontaktseitenkontur 12.

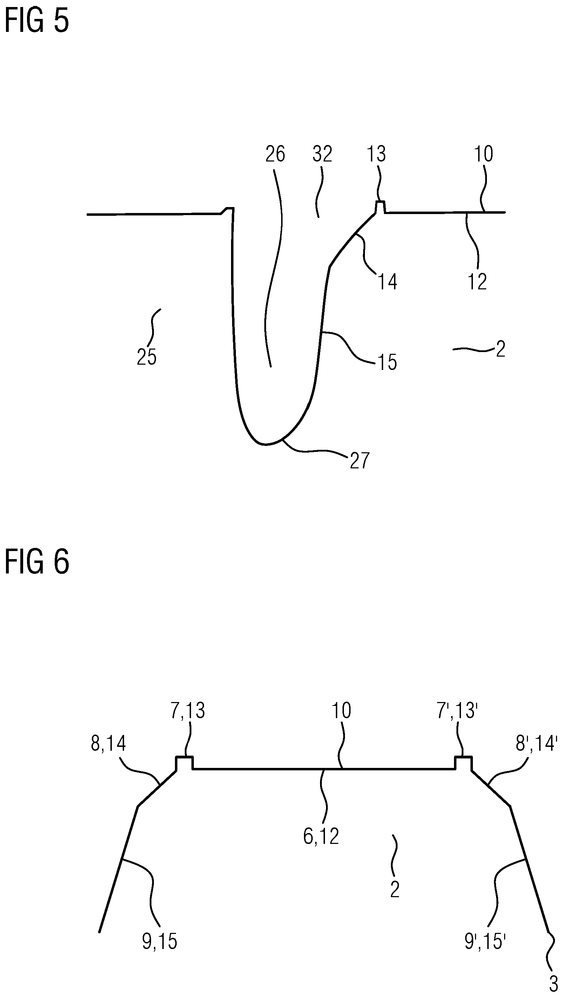

Figur 5 zeigt eine alternative Ausführungsform einer Profilblockkontur 10 mit einer Kontaktseitenkontur 12, einer Kantenbereichskontur 13, einer Fasenkontur 14 und einer Flankenkontur 15. Angrenzend an den ersten Profilblock 2 ist eine Rille 26 angeordnet, die den ersten Profilblock 2 von einem zweiten Profilblock 25 trennt. Die Rille 26 verläuft in dem gezeigten Ausführungsbeispiel senkrecht zu der Zeichnungsebene der Figur 5. Auf einer Oberfläche der Rille 26 verläuft eine Rillenkontur 27, die an die Flankenkontur 15 der Profilblockkontur 10 angrenzt. Gemäß Figur 5 ist eine erfindungsgemäße Profilblockkontur 10 nur an dem ersten Profilblock 2 vorgesehen, nicht aber auf der gegenüberliegenden Seite der Rille 26 an dem zweiten Profilblock 25. Das dargestellte Ausführungsbeispiel betrifft vorzugsweise die Profilblöcke 2, 25 eines laufrichtungsgebundenen Profils; dabei können die Bremseigenschaften bereits dann merklich verbessert werden, wenn die erfindungsgemäße Profilblockkontur nur an den Bremskanten 32 vorgesehen wird.

Figur 6 zeigt eine weitere alternative Ausführungsform einer Profilblockkontur 10. Hierbei sind auf beiden Seiten des Profilblocks 2 auf der Profilblockoberfläche 3 jeweils eine Flanke 9, 9', jeweils eine Fase 8, 8' und jeweils ein Kantenbereich 7, 7' angeordnet, wobei die Kantenbereiche 7, 7' einander gegenüberliegend an die Kontaktseite 6 grenzen. Entsprechend umfasst die in Figur 6 dargestellte Profilblockkontur 10 zwei Flankenkonturen 15, 15', zwei Fasenkonturen 14, 14' und zwei Kantenbereiche 13, 13', wobei die Kantenbereiche 14, 14' an gegenüberliegenden Enden an die Kontaktseitenkontur 12 angrenzen. Die gezeigte Ausführungsform eignet sich insbesondere für nicht laufrichtungsgebundene Profile.

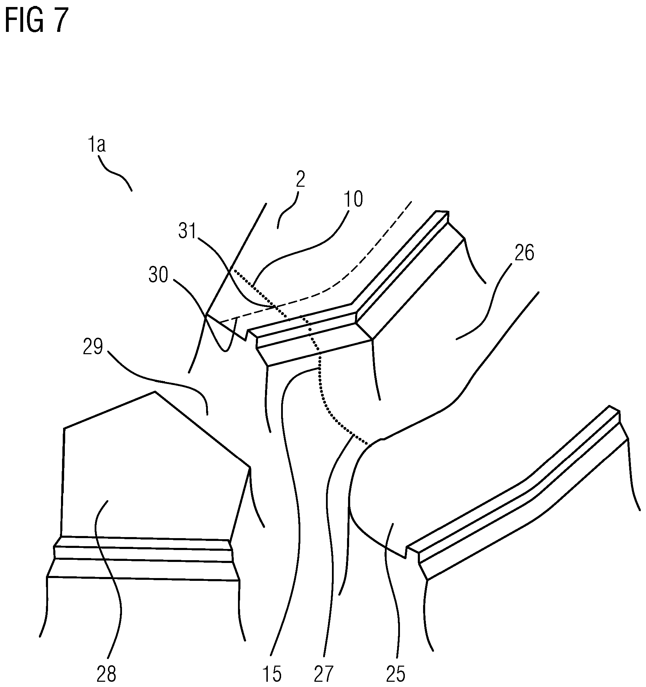

Figur 7 zeigt schematisch eine perspektivische Ansicht eines Laufstreifens 1a mit mehreren Profilblöcken 2, 25, 28 gemäß einer weiteren alternativen Ausführungsform der Erfindung. Zwischen den Profilblöcken 2, 25, 28 verlaufen Rillen 26, 29. An eine Rillenkontur 27 der Rille 26 grenzt die Flankenkontur 15 einer Profilblockkontur 10 an. Die Rillenkontur 27 und die Profilblockkontur 10 verlaufen in dem dargestellten Ausführungsbeispiel senkrecht zu einer Breitenerstreckung 30 des Profilblocks 2 an einem Schnittpunkt 31.

### Bezugszeichenliste

- 1: Fahrzeugreifen
- 1a: Laufstreifen
- 1b: Basisfläche
- 3: Profilblockoberfläche
- 4: Radialrichtung
- 5: Umfangsrichtung
- 6: Kontaktseite
- 7: Kantenbereich
- 7': Kantenbereich
- 8: Fase
- 8': Fase
- 9: Flanke
- 9': Flanke
- 10: Profilblockkontur
- 11: Axialrichtung
- 12: Kontaktseitenkontur
- 13: Kantenbereichskontur
- 13': Kantenbereichskontur
- 13a: erster Abschnitt
- 13b: zweiter Abschnitt
- 13c: dritter Abschnitt
- 13d: vierter Punkt
- 14: Fasenkontur
- 14': Fasenkontur
- 14a: zweiter Punkt
- 14b: dritter Punkt
- 15: Flankenkontur
- 15': Flankenkontur
- 15a: erster Punkt
- 16: erste Gerade
- 17: zweite Gerade
- 18: Fasenwinkel
- 19: dritte Gerade
- 20: Flankenwinkel
- 21: zusätzliche Gerade
- 22: Kantenbereichswinkel
- 23: Kantenbereichshöhe
- 24: Schneekante
- 25: Profilblock
- 26: Rille
- 27: Rillenkontur
- 28: Profilblock
- 29: Rille
- 30: Breitenerstreckung
- 31: Schnittpunkt
- 32: Bremskante
- 33: Verbindungsgerade

## Patentansprüche

1. Fahrzeugreifen (1) mit einem Laufstreifen (1a), umfassend wenigstens zwei Profilblöcke (2, 25), wobei zwischen den zwei Profilblöcken (2, 25) eine Rille (26) angeordnet ist, wobei auf der Oberfläche der Rille (26) eine eindimensionale Rillenkontur (27) verläuft, wobei eine Profilblockkontur (10) wenigstens eines der Profilblöcke (2) eine Kontaktseitenkontur (12), eine Kantenbereichskontur (13), eine Fasenkontur (14) und eine Flankenkontur (15) umfasst, wobei die Kontaktseitenkontur (12) an die Kantenbereichskontur (13) grenzt, wobei die Kantenbereichskontur (13) an die Fasenkontur (14) grenzt und wobei die Fasenkontur (14) an die Flankenkontur (15) grenzt, wobei die Rillenkontur (27) an die Flankenkontur (15) angrenzt, wobei die Kontaktseitenkontur (12) im Wesentlichen in einer Basisfläche (1b) des Laufstreifens (1a) verläuft, wobei wenigstens ein Punkt auf der Kantenbereichskontur (13) um eine Kantenbereichshöhe (23) oberhalb der Basisfläche (1b) liegt,
**dadurch gekennzeichnet,**
**dass** die Profilblockkontur (10) zwischen einem ersten Punkt (15a) auf der Flankenkontur (15) und einem unterhalb der Basisfläche (1b) gelegenen zweiten Punkt (14a) auf der Fasenkontur (14) einen konvexen Verlauf annimmt.

2. Fahrzeugreifen nach Anspruch 1, **dadurch gekennzeichnet, dass** die Kontaktseitenkontur (12) in einem abgewickelten Zustand des Laufstreifens (1a) im Wesentlichen entlang einer ersten Geraden (16) verläuft, wobei die Fasenkontur (14) im Wesentlichen entlang einer zweiten Geraden (17) verläuft, wobei die zweite Gerade (17) gegenüber der ersten Geraden (16) um einen Fasenwinkel (18) verdreht ist, wobei der Fasenwinkel (18) vorzugsweise zwischen 20° und 70°, weiter vorzugsweise zwischen 35° und 55° liegt.

3. Fahrzeugreifen nach Anspruch 2, **dadurch gekennzeichnet, dass** die Flankenkontur (15) im Wesentlichen entlang einer dritten Geraden (19) verläuft, wobei die dritte Gerade (19) gegenüber der ersten Geraden (16) um einen Flankenwinkel (20) verdreht ist, wobei der Flankenwinkel vorzugsweise kleiner als 95° ist, weiter vorzugsweise zwischen 60° und 90° und noch weiter vorzugsweise zwischen 77° und 90° beträgt.

4. Fahrzeugreifen nach Anspruch 3, **dadurch gekennzeichnet, dass** der Fasenwinkel (18) kleiner als der Flankenwinkel (20) ist und vorzugsweise zwischen 10° und 80°, weiter vorzugsweise zwischen 25° und 55° kleiner ist als der Flankenwinkel (20).

5. Fahrzeugreifen nach einem oder mehreren der Ansprüche 2 bis 4, **dadurch gekennzeichnet, dass** ein an die Fasenkontur (14) angrenzender erster Abschnitt (13a) der Kantenbereichskontur (13) im Wesentlichen entlang einer zusätzlichen Geraden (21) verläuft, wobei die zusätzliche Gerade (21) gegenüber der ersten Geraden (16) um einen Kantenbereichswinkel (22) verdreht ist und wobei der Kantenbereichswinkel (22) sich von dem Fasenwinkel (18) unterscheidet.

6. Fahrzeugreifen nach Anspruch 5, **dadurch gekennzeichnet, dass** der Kantenbereichswinkel (22) nicht größer als 90° ist und vorzugsweise zwischen 20° und 90°, weiter vorzugsweise zwischen 45° und 90° liegt.

7. Fahrzeugreifen nach einem oder mehreren der Ansprüche 5 oder 6, **dadurch gekennzeichnet, dass** der Kantenbereichswinkel (22) zwischen 10° und 80°, vorzugsweise zwischen 25° und 55° größer ist als der Fasenwinkel (18).

8. Fahrzeugreifen nach einem oder mehreren der Ansprüche 5 bis 7, **dadurch gekennzeichnet, dass** der erste Abschnitt (13a) der Kantenbereichskontur (13) wenigstens teilweise oberhalb der Basisfläche (1b) verläuft.

9. Fahrzeugreifen nach einem oder mehreren der Ansprüche 1 bis 8, **dadurch gekennzeichnet**, die Fasenkontur (14) vollständig unterhalb der Basisfläche (1b) verläuft.

10. Fahrzeugreifen nach einem oder mehreren der Ansprüche 1 bis 9, **dadurch gekennzeichnet, dass** eine Verbindungsgerade (33) durch den ersten Punkt (15a) auf der Flankenkontur (15) und einen dritten Punkt (14b) auf der Fasenkontur (14) die Kantenbereichskontur (13) in einem vierten Punkt (13d) schneidet.

11. Fahrzeugreifen nach Anspruch 10, **dadurch gekennzeichnet, dass** der dritte Punkt (14b) mit dem zweiten Punkt (14a) zusammenfällt.

12. Fahrzeugreifen nach einem oder mehreren der Ansprüche 1 bis 11, **dadurch gekennzeichnet, dass** der konvexe Verlauf senkrecht zu einer geraden Verbindungsstrecke zwischen dem ersten Punkt (15a) und dem zweiten Punkt (14a) wenigstens bis zu 0,3 mm, vorzugsweise zwischen 0,5 mm und 1 mm beabstandet ist.

13. Fahrzeugreifen nach einem oder mehreren der Ansprüche 1 bis 12, **dadurch gekennzeichnet, dass** sich die Fasenkontur (14) in einem abgewickelten Zustand des Laufstreifens (1a) parallel zur Basisfläche (1b) zwischen 0,5 mm und 3 mm und senkrecht zur Basisfläche (1b) zwischen 0,5 mm und 4 mm erstreckt, wobei sich vorzugsweise die Fasenkontur (15) parallel zur Basisfläche (1b) zwischen 0,8 mm und 2 mm und senkrecht zur Basisfläche (1b) zwischen 0,8 mm und 3 mm erstreckt.

14. Fahrzeugreifen nach einem oder mehreren der Ansprüche 1 bis 13, **dadurch gekennzeichnet, dass** die Kantenbereichshöhe (23) zwischen 0,1 mm und 1 mm, vorzugsweise zwischen 0,2 mm und 0,5 mm beträgt.

15. Fahrzeugreifen nach einem oder mehreren der Ansprüche 1 bis 14, **dadurch gekennzeichnet, dass** die Kantenbereichskontur (13) einen zweiten Abschnitt (13b) umfasst, wobei der zweite Abschnitt (13b) in einem abgewickelten Zustand des Laufstreifens (1a) im Wesentlichen parallel zu der Basisfläche (1b) des Laufstreifens (1a) verläuft, wobei der zweite Abschnitt (13b) zwischen 0,2 mm und 2 mm, vorzugsweise zwischen 0,3 mm und 1 mm lang ist.

## Claims

1. Vehicle tyre (1) having a tread (1a), comprising at least two profile blocks (2, 25), wherein a groove (26) is arranged between the two profile blocks (2, 25), wherein a one-dimensional groove contour (27) runs on the surface of the groove (26), wherein a profile block contour (10) of at least one of the profile blocks (2) comprises a contact side contour (12), an edge region contour (13), a bevel contour (14) and a flank contour (15), wherein the contact side contour (12) adjoins the edge region contour (13), wherein the edge region contour (13) adjoins the bevel contour (14), and wherein the bevel contour (14) adjoins the flank contour (15), wherein the groove contour (27) adjoins the flank contour (15), wherein the contact side contour (12) runs substantially in a base area (1b) of the tread (1a), wherein at least one point on the edge region contour (13) lies above the base area (1b) by an edge region height (23),
**characterized**
**in that** the profile block contour (10) follows a convex profile between a first point (15a) on the flank contour (15) and a second point (14a), situated below the base area (1b), on the bevel contour (14).

2. Vehicle tyre according to Claim 1, **characterized in that** , in an unwound state of the tread (1a), the contact side contour (12) runs substantially along a first straight line (16), wherein the bevel contour (14) runs substantially along a second straight line (17), wherein the second straight line (17) is rotated by a bevel angle (18) with respect to the first straight line (16), wherein the bevel angle (18) is preferably between 20° and 70°, more preferably between 35° and 55°.

3. Vehicle tyre according to Claim 2, **characterized in that** the flank contour (15) runs substantially along a third straight line (19), wherein the third straight line (19) is rotated by a flank angle (20) with respect to the first straight line (16), wherein the flank angle is preferably less than 95°, more preferably between 60° and 90°, and is even more preferably between 77° and 90°.

4. Vehicle tyre according to Claim 3, **characterized in that** the bevel angle (18) is smaller than the flank angle (20) and is preferably between 10° and 80°, more preferably between 25° and 55°, smaller than the flank angle (20).

5. Vehicle tyre according to one or more of Claims 2 to 4, **characterized in that** a first portion (13a) of the edge region contour (13) adjoining the bevel contour (14) runs substantially along an additional straight line (21), wherein the additional straight line (21) is rotated by an edge region angle (22) with respect to the first straight line (16), and wherein the edge region angle (22) differs from the bevel angle (18).

6. Vehicle tyre according to Claim 5, **characterized in that** the edge region angle (22) is not greater than 90° and is preferably between 20° and 90°, more preferably between 45° and 90°.

7. Vehicle tyre according to one or more of Claims 5 and 6, **characterized in that** the edge region angle (22) is between 10° and 80°, preferably between 25° and 55°, larger than the bevel angle (18).

8. Vehicle tyre according to one or more of Claims 5 to 7, **characterized in that** the first portion (13a) of the edge region contour (13) runs at least partially above the base area (1b).

9. Vehicle tyre according to one or more of Claims 1 to 8, **characterized in that** the bevel contour (14) runs completely below the base area (1b).

10. Vehicle tyre according to one or more of Claims 1 to 9, **characterized in that** a connecting straight line (33) through the first point (15a) on the flank contour (15) and a third point (14b) on the bevel contour (14) intersects the edge region contour (13) at a fourth point (13d).

11. Vehicle tyre according to Claim 10, **characterized in that** the third point (14b) coincides with the second point (14a).

12. Vehicle tyre according to one or more of Claims 1 to 11, **characterized in that** the convex profile is spaced apart at least by up to 0.3 mm, preferably between 0.5 mm and 1 mm, perpendicular to a straight connecting section between the first point (15a) and the second point (14a).

13. Vehicle tyre according to one or more of Claims 1 to 12, **characterized in that**, in an unwound state of the tread (1a), the bevel contour (14) extends between 0.5 mm and 3 mm parallel to the base area (1b) and between 0.5 mm and 4 mm perpendicular to the base area (1b), wherein the bevel contour (15) preferably extends between 0.8 mm and 2 mm parallel to the base area (1b) and between 0.8 mm and 3 mm perpendicular to the base area (1b).

14. Vehicle tyre according to one or more of Claims 1 to 13, **characterized in that** the edge region height (23) is between 0.1 mm and 1 mm, preferably between 0.2 mm and 0.5 mm.

15. Vehicle tyre according to one or more of Claims 1 to 14, **characterized in that** the edge region contour (13) comprises a second portion (13b), wherein, in an unwound state of the tread (1a), the second portion (13b) runs substantially parallel to the base area (1b) of the tread (1a), wherein the second portion (13b) is between 0.2 mm and 2 mm, preferably between 0.3 mm and 1 mm in length.

## Revendications

1. Pneumatique de véhicule (1) présentant une bande de roulement (1a), comprenant au moins deux blocs de profil (2, 25), une rainure (26) étant disposée entre les deux blocs de profil (2, 25), un contour de rainure unidimensionnel (27) s'étendant sur la surface de la rainure (26), un contour de bloc de profil (10) d'au moins l'un des blocs de profil (2) comprenant un contour de côté de contact (12), un contour de zone de bord (13), un contour de chanfrein (14) et un contour de flanc (15), le contour de côté de contact (12) étant adjacent au contour de zone de bord (13), le contour de zone de bord (13) étant adjacent au contour de chanfrein (14) et le contour de chanfrein (14) étant adjacent au contour de flanc (15), le contour de rainure (27) étant adjacent au contour de flanc (15), le contour de côté de contact (12) s'étendant sensiblement dans une surface de base (1b) de la bande de roulement (1a), au moins un point situé sur le contour de zone de bord (13) se trouvant à une hauteur de zone de bord (23) au-dessus de la surface de base (1b),
**caractérisé**
**en ce que** le contour de bloc de profil (10) présente un tracé convexe entre un premier point (15a) situé sur le contour de flanc (15) et un deuxième point (14a), situé au-dessous de la surface de base (1b), sur le contour de chanfrein (14).

2. Pneumatique de véhicule selon la revendication 1, **caractérisé en ce que** le contour de côté de contact (12), dans un état développé de la bande de roulement (1a), s'étend sensiblement le long d'une première droite (16), le contour de chanfrein (14) s'étendant sensiblement le long d'une deuxième droite (17), la deuxième droite (17) étant tournée, par rapport à la première droite (16), d'un angle de chanfrein (18), l'angle de chanfrein (18) étant de préférence compris entre 20° et 70°, et de manière davantage préférée entre 35° et 55°.

3. Pneumatique de véhicule selon la revendication 2, **caractérisé en ce que** le contour de flanc (15) s'étend sensiblement le long d'une troisième droite (19), la troisième droite (19) étant tournée, par rapport à la première droite (16), d'un angle de flanc (20), l'angle de flanc étant de préférence inférieur à 95°, de manière davantage préférée compris entre 60° et 90° et de manière encore davantage préférée compris entre 77° et 90°.

4. Pneumatique de véhicule selon la revendication 3, **caractérisé en ce que** l'angle de chanfrein (18) est inférieur à l'angle de flanc (20) et est de préférence inférieur à l'angle de flanc (20) de 10° à 80°, et de manière davantage préférée de 25° à 55°.

5. Pneumatique de véhicule selon une ou plusieurs des revendications 2 à 4, **caractérisé en ce qu'**une première section (13a) du contour de zone de bord (13), adjacente au contour de chanfrein (14), s'étend sensiblement le long d'une droite supplémentaire (21), la droite supplémentaire (21) étant tournée, par rapport à la première droite (16), d'un angle de zone de bord (22), et l'angle de zone de bord (22) étant différent de l'angle de chanfrein (18).

6. Pneumatique de véhicule selon la revendication 5, **caractérisé en ce que** l'angle de zone de bord (22) n'est pas supérieur à 90° et est de préférence compris entre 20° et 90°, et de manière davantage préférée entre 45° et 90°.

7. Pneumatique de véhicule selon une ou plusieurs des revendications 5 ou 6, **caractérisé en ce que** l'angle de zone de bord (22) est supérieur à l'angle de chanfrein (18) de 10° à 80°, de préférence de 25° à 55°.

8. Pneumatique de véhicule selon une ou plusieurs des revendications 5 à 7, **caractérisé en ce que** la première section (13a) du contour de zone de bord (13) s'étend au moins partiellement au-dessus de la surface de base (1b).

9. Pneumatique de véhicule selon une ou plusieurs des revendications 1 à 8, **caractérisé en ce que** le contour de chanfrein (14) s'étend entièrement au-dessous de la surface de base (1b).

10. Pneumatique de véhicule selon une ou plusieurs des revendications 1 à 9, **caractérisé en ce qu'**une droite de liaison (33) passant par le premier point (15a) situé sur le contour de flanc (15) et par un troisième point (14b) situé sur le contour de chanfrein (14) coupe le contour de zone de bord (13) en un quatrième point (13d).

11. Pneumatique de véhicule selon la revendication 10, **caractérisé en ce que** le troisième point (14b) coïncide avec le deuxième point (14a).

12. Pneumatique de véhicule selon une ou plusieurs des revendications 1 à 11, **caractérisé en ce que** le tracé convexe est espacé, perpendiculairement à un segment de liaison rectiligne entre le premier point (15a) et le deuxième point (14a), d'au moins jusqu'à 0,3 mm, de préférence entre 0,5 mm et 1 mm.

13. Pneumatique de véhicule selon une ou plusieurs des revendications 1 à 12, **caractérisé en ce que**, dans un état développé de la bande de roulement (1a), le contour de chanfrein (14) s'étend parallèlement à la surface de base (1b) sur une distance comprise entre 0,5 mm et 3 mm et perpendiculairement à la surface de base (1b) sur une distance comprise entre 0,5 mm et 4 mm, le contour de chanfrein (15) s'étendant de préférence parallèlement à la surface de base (1b) sur une distance comprise entre 0,8 mm et 2 mm et perpendiculairement à la surface de base (1b) sur une distance comprise entre 0,8 mm et 3 mm.

14. Pneumatique de véhicule selon une ou plusieurs des revendications 1 à 13, **caractérisé en ce que** la hauteur de zone de bord (23) est comprise entre 0,1 mm et 1 mm, de préférence entre 0,2 mm et 0,5 mm.

15. Pneumatique de véhicule selon une ou plusieurs des revendications 1 à 14, **caractérisé en ce que** le contour de zone de bord (13) comprend une deuxième section (13b), la deuxième section (13b), dans un état développé de la bande de roulement (1a), s'étendant sensiblement parallèlement à la surface de base (1b) de la bande de roulement (1a), la deuxième section (13b) ayant une longueur comprise entre 0,2 mm et 2 mm, de préférence entre 0,3 mm et 1 mm.
